# FASCICULE DE BREVET EUROPEEN

(11) **EP 3 135 640 B1**
(45) Date de publication et mention de la délivrance du brevet: **18.03.2020**
(21) Numéro de dépôt: 15182604.7
(22) Date de dépôt: 26.08.2015
(51) Int. Cl.: C03B 40/02, C03B 40/027, C03B 9/14, C03B 9/193

(54) **GRAISSAGE DE MOULES EBAUCHEURS DANS UN PROCÉDÉ DE FABRICATION DE PRODUITS EN VERRE CREUX**
EINFETTUNG VON VORFORMEN BEIM HERSTELLUNGSVERFAHREN VON PRODUKTEN AUS HOHLGLAS
LUBRICATION OF BLANK MOULDS IN A METHOD FOR MANUFACTURING HOLLOW GLASS PRODUCTS

(43) Date de publication de la demande: 01.03.2017
(73) Titulaire: Socabelec S.A., 5190 Ham-Sur-Sambre (BE)
(72) Inventeur: VALLI, Raphaël, 6250 Presles (BE); JONGERT, Dirk, 1730 Asse (BE); VERI, Marco, 5060 Sambreville (BE)
(74) Mandataire: Argyma

(56) Documents cités:
- EP-A2- 0 393 630
- WO-A1-2007/138226
- GB-A- 975 123
- US-A- 2 573 337
- US-A- 2 846 323
- US-A- 2 977 237
- US-A- 3 495 962
- US-A- 3 519 408
- US-A- 3 523 016
- US-A- 3 988 137
- US-A- 4 119 547
- US-A- 4 579 574
- US-A- 5 139 560
- US-A1- 2010 175 617

## Description

### Domaine de l'invention

L'invention se rapporte à la fabrication de produits en verre creux, tels que bouteilles, flacons ou pots.

### État de la technique

Cette fabrication met en œuvre des machines I.S. (Individual Section), dans lesquelles chaque section est destinée à traiter une paraison ou plusieurs simultanément, chaque paraison étant reçue et traitée dans un moule ébaucheur, puis un moule finisseur dédiés.

Le moule ébaucheur est constitué de deux demi-moules définissant un plan de joint vertical.

Les deux demi-moules se referment sur un moule de bague à l'extrémité inférieure du moule ébaucheur. Le moule ébaucheur comprend également un poinçon dont le mouvement ascendant produit le perçage de l'ébauche.

Le chargement de la paraison dans le moule ébaucheur est effectué par gravité par son extrémité supérieure ouverte.

Dans le procédé pressé-soufflé, ce chargement est effectué en position basse du poinçon. On ferme ensuite l'extrémité supérieure du moule ébaucheur par le fond puis le poinçon effectue un mouvement partant du moule de bague vers le haut, entraînant la paraison avec lui. Après avoir rempli le fond du moule (partie supérieure), le verre traverse les canaux de pressage pour former la bague.

Dans le procédé soufflé-soufflé, le chargement de la paraison est effectué en position haute du poinçon, cependant relativement court. L'extrémité supérieure du moule ébaucheur est reliée à un moyen pour la compression du fond de la paraison, ayant pour effet de former la bague. Puis cette extrémité supérieure est fermée par le fond ébaucheur, le poinçon est descendu et le perçage de l'ébauche est effectué par soufflage.

Le fond ébaucheur, et les deux demi-moules ébaucheurs sont ouverts, et l'ébauche tenue par le moule de bague est transférée dans le moule finisseur par retournement selon un axe horizontal.

Une source importante de défauts d'aspect à la surface du produit fini provient du contact relativement violent de la paraison avec la surface de la cavité du moule ébaucheur lors du chargement. Il est nécessaire, pour supprimer ces défauts, de veiller à la qualité de la surface de la cavité, par des graissages périodiques de celle-ci. Ces graissages sont normalement effectués par un opérateur au moyen d'une brosse préalablement trempée dans de l'huile. L'opérateur peut procéder à la volée, sans arrêt du fonctionnement normal de la machine I.S., mais des conditions de sécurité plus élevées peuvent prescrire l'éjection des paraisons destinées à la section concernée pendant au moins un cycle de fonctionnement de la machine.

Le graissage des moules ébaucheurs par un opérateur pose plusieurs types de problèmes.

En premier lieu, l'opérateur est soumis à une température élevée et à un bruit important même en utilisant les protections recommandées habituellement. L'exposition à de telles conditions peut être limitée dans le temps par réglementations nationales, par exemple.

De plus, il doit coordonner ses mouvements avec ceux d'éléments mécaniques automatisés, et peut en ressentir rapidement une tension, une fatigue. D'autre part, l'opérateur graisse les moules périodiquement selon un choix plus ou moins aléatoire, mais ne réserve pas le graissage aux seuls moules qui en ont réellement besoin.

On connaît du document WO2007138226 un procédé et un dispositif pour le graissage automatique de moules pour le formage de produits en verre creux. Le graissage décrit dans ce document nécessite cependant un arrêt de la ligne de production dans le but d'introduire une canne de pulvérisation à l'intérieur du moule ébaucheur lorsque ce dernier est en position fermée, c'est-à-dire lorsque les deux demi-moules le constituant sont en contact l'un avec l'autre. Une telle interruption engendre bien évidemment une perte de productivité du procédé en raison de la diminution du temps de production. De plus, les produits obtenus directement après graissage du moule ébaucheur sont en général défectueux et doivent être rejetés comme en atteste le tableau dévoilé à la page 10 du document WO2007138226.

Par ailleurs, les procédés de graissage de l'art antérieur, qu'ils soient effectués manuellement ou par un automate ont une incidence sur la durée de vie des moules de par l'oxydation générée par le dépôt de la couche de lubrifiant.

### Résumé de l'invention

Un but de l'invention est d'augmenter le rendement d'un procédé de fabrication de produits en verre creux, tout en maintenant une qualité inchangée voire supérieure des produits fabriqués.

Un autre but de l'invention est d'augmenter la durée de vie des moules utilisés dans le cadre d'un procédé de fabrication de produits en verre creux.

A cette fin, l'invention concerne un procédé de fabrication d'un produit en verre creux par une machine I.S. selon la revendication 1.

US 2010/175617 enseigne la poursuite de la fabrication pendant le graissage et WO 2007/138226 enseigne le graissage par un robot mobile externe à la machine I.S.

Par gicleur, on entend une pièce comportant un trou calibré servant à acheminer la graisse et à assurer sa diffusion dans les moules ébaucheurs.

L'utilisation d'un robot mobile configuré pour effectuer le graissage du moule ébaucheur lorsque ce dernier est en position ouverte, après le départ de la paraison du moule ébaucheur vers le moule finisseur, s'est révélée particulièrement avantageuse car un tel procédé de graissage n'entrave pas le procédé de fabrication des produits de verre creux et ne nécessite par conséquent pas d'interruption de la chaine de production. De plus, le procédé de fabrication selon l'invention ne nécessite nullement l'éjection de paraisons destinées aux moules ébaucheurs en train d'être graissés car le gicleur est retiré avant le retour du bras de transfert au niveau du moule ébaucheur, et donc avant la chute de ces paraisons qui peuvent poursuivre normalement le cycle du procédé.

En raison de la non-interruption du procédé de fabrication, le procédé de graissage selon l'invention peut par conséquent être effectué à une fréquence plus élevée que les procédés de graissage de l'art antérieur qui impliquent une interruption du procédé de fabrication et dont une augmentation de la fréquence va de pair avec une diminution du rendement du procédé de fabrication. Il a pu par ailleurs être observé que la possibilité d'effectuer des graissages plus fréquents dans le cadre du procédé de fabrication selon l'invention permet de diminuer la quantité de lubrifiant délivré lors d'une opération de graissage du moule ébaucheur. L'augmentation de la fréquence des opérations de graissage, couplée à la diminution de la dose de lubrifiant délivrée à chaque opération de graissage s'est révélée de manière surprenante particulièrement avantageuse pour préserver les moules ébaucheurs de l'oxydation typiquement observée dans les procédés de l'art antérieur.

Par position de graissage du gicleur, on entend une position du gicleur dans laquelle le lubrifiant délivré par le gicleur atteint la surface interne du moule ébaucheur en vue d'effectuer un graissage de ce dernier. La position de graissage est ainsi fonction de la portée et de la forme du jet de pulvérisation délivré par le gicleur.

Selon un mode de réalisation avantageux du procédé selon l'invention, le gicleur porté par le robot mobile est amené par un mouvement de translation dans une position de graissage située au-dessus des deux demi-moules ébaucheurs. Une telle position de graissage s'est en effet révélée avantageuse car elle ne nécessite pas l'introduction du gicleur dans l'espace délimité par les deux demi-moules et permet par conséquent un gain de temps en comparaison avec les procédés de l'art antérieur qui prévoient l'introduction d'une canne de pulvérisation à l'intérieur du moule ébaucheur.

Selon un mode de réalisation avantageux, le bras du robot se subdivise en deux parties, de manière à former un Y, chacune des deux parties comprenant un gicleur assurant la pulvérisation d'un des deux demi-moules du moule ébaucheur.

Dans un tel mode de réalisation, lors de l'étape de graissage, le premier gicleur est orienté vers l'un des deux demi-moules, avant que le deuxième gicleur ne soit orienté vers l'autre des demi-moules par un mouvement du bras du robot. La présence de deux gicleurs portés chacun par une des parties du bras du robot permet de limiter la complexité et l'amplitude du mouvement du bras du robot pour lubrifier successivement les deux demi-moules.

Selon un mode de réalisation avantageux, le procédé de fabrication est effectué à l'aide d'une ligne de production comprenant une pluralité de moules ébaucheurs, le graissage des moules ébaucheurs étant effectué à intervalle de temps régulier, ou à la demande de l'opérateur, le robot mobile déplaçant le gicleur successivement au niveau des différents moules ébaucheurs, la ligne de production comprenant au moins une position de repos se trouvant à l'une de ses extrémités ou entre deux moules ébaucheurs successifs, le robot mobile étant stationné à ladite au moins une position de repos lorsqu'il n'a pas d'opération de graissage à effectuer pendant une durée minimale.

Une telle position de repos qui ne se trouve pas directement face à un moule ébaucheur s'est en effet révélée avantageuse afin d'éviter au robot une exposition trop importante aux sources de chaleur nécessaires au moulage du verre dans les moules ébaucheurs.

Avantageusement, dans le procédé de fabrication selon l'invention, le graissage est effectué à l'aide d'une composition lubrifiante comprenant :
- une huile minérale naphténique, ladite huile ayant une concentration en poids comprise entre 50 et 70 % ;
- une dispersion comprenant des particules de graphite dont la taille est comprise entre 0.5 µm et 25 µm, ladite concentration en graphite dans la dispersion étant supérieure à 15 % en poids, ladite dispersion ayant une concentration en poids comprise entre 5 et 25 % ;
- au moins un ester d'acide gras sulfuré, ledit ester d'acide gras comprenant de 4 à 22 atomes de carbone et étant saturé ou insaturé, ledit ester gras sulfuré ayant une concentration en poids comprise entre 10 et 16 %.

Il a en effet pu être mis en évidence que la composition lubrifiante avantageuse était particulièrement efficace pour des opérations de graissage fréquentes mais avec une quantité plus faible par opération de graissage que les quantités typiquement utilisées dans l'art antérieur. L'utilisation d'une telle composition lubrifiante dans le procédé de fabrication de l'invention permet une diminution de la consommation en lubrifiant tout en fournissant un nombre réduit de produits devant être rejetés suite à une opération de graissage. De plus, il a pu être observé qu'une telle composition lubrifiante a une action oxydante réduite sur les moules qu'elle lubrifie, ce qui accroit leur durée de vie.

Dans un mode de réalisation intéressant, la composition lubrifiante comprend du polydiméthylsiloxane (PDMS), ledit polydiméthylsiloxane ayant une concentration en poids comprise entre 1 et 10 %. Il a pu en effet être observé que l'ajout d'un tel additif augmentait la qualité des produits issus du procédé de fabrication juste après une opération de graissage et diminuait encore l'action oxydante sur les moules de la composition selon l'invention.

La composition lubrifiante peut comprendre un alcène sulfuré comprenant de 8 à 18 atomes de carbone, ledit alcène sulfuré ayant une concentration en poids comprise entre 5 et 12 %.

La composition lubrifiante peut également comprendre un ester méthylique d'acide gras comprenant de 12 à 22 atomes de carbone et étant saturé ou insaturé, ledit ester méthylique d'acide gras ayant une concentration en poids comprise entre 1 % et 10 %.

Il a en effet été observé que l'ajout de l'un des deux ou selon un mode de réalisation préféré des deux derniers additifs mentionnés ci-dessus fournissait des performances optimales en matière de consommation en lubrifiant, taux de produits rejetés directement après l'opération de graissage et oxydation des moules. Il a en particulier pu être observé que l'utilisation d'une composition comprenant l'ensemble des constituants ci-dessus permet d'obtenir un taux de produits rejetés égal à zéro, ce qui assure un rendement maximal du procédé.

Un autre but de l'invention est de fournir un dispositif pour la mise en œuvre des opérations de graissage du procédé de fabrication selon l'invention.

A cette fin, le dispositif pour la mise en œuvre des opérations de graissage du procédé de fabrication selon l'invention comprend :
- un robot comprenant un réservoir de lubrifiant sous pression et un bras mobile comprenant au moins un gicleur, le robot étant mobile le long du côté moules ébaucheurs de la machine I.S.
ledit robot étant configuré pour
(i) amener le gicleur en position de graissage après le départ de la paraison en verre du moule ébaucheur vers le moule finisseur ;
(ii) pulvériser le lubrifiant à l'intérieur dudit moule ébaucheur ;
(iii) retirer le gicleur de la position de graissage avant le retour du bras de transfert entre les deux demi-moules du moule ébaucheur.

Selon un mode de réalisation avantageux, le dispositif selon l'invention comprend un rail le long duquel ledit robot peut se déplacer, ledit rail longeant les différents moules ébaucheurs de la machine I.S..

Selon un mode de réalisation avantageux, le rail est plus long que la machine I.S., l'excédent de longueur une position de repos suffisamment large pour stationner le robot à l'écart des sources de chaleur de la machine I.S. nécessaires au moulage du verre.

Une telle position de repos permet en effet d'éviter un échauffement continu du robot et par conséquent de le stationner le robot dans de bonnes conditions lorsqu'il n'effectue pas d'opérations de graissage.

Selon un mode de réalisation avantageux, une réplique du moule ébaucheur à graisser est mis en œuvre par la machine I.S. est installée au niveau de la position de repos. Une telle réplique s'est en effet révélée très utile pour calibrer le robot du dispositif selon l'invention. Une bonne répartition du lubrifiant sur la surface interne des moules requière en effet un calibrage du gicleur et du robot. Une réplique installée au niveau de la position de repos fournit une aide précieuse à l'opérateur qui peut effectuer des réglages fins sur le robot et le gicleur sans interrompre la ligne de production.

Selon un mode de réalisation avantageux, ladite réplique est d'une couleur offrant un contraste visible à l'œil nu avec la couleur de la composition lubrifiante mise en œuvre dans le procédé de fabrication. Un tel contraste visuel permettra une observation aisée par l'opérateur de la répartition du lubrifiant sur la surface interne du moule, ce qui facilitera le calibrage du robot et du gicleur.

La réplique peut être d'une couleur plus claire que les moules ébaucheurs mis en œuvre ébaucheurs mis dans la machine I.S.. La graisse et les moules mis en œuvre par la machine I.S. étant en général de couleur foncée, il est intéressant de réaliser la réplique dans une couleur plus claire en vue d'offrir un contraste optimal.

Le bras du robot peut comprendre une partie amovible sur laquelle est fixée le gicleur. Il a en effet pu être observé qu'en pratique le bras du robot est exposé à des mouvements parfois complexes et difficilement prévisibles des différents organes de la machine I.S.. Il s'est donc révélé fort utile de prévoir que la partie du bras du robot supportant le gicleur puisse aisément être remplacée en cas d'endommagement dû à un choc trop violent entre celle-ci et la machine I.S.. Cette partie amovible peut donc être détachée et remplacée par l'opérateur sans devoir effectuer de réparation lourde au robot.

Selon un mode de réalisation avantageux, la pièce amovible du bras du robot se subdivise en deux parties de manière à former un Y, chacune des parties comprenant un gicleur. Cet arrangement particulier s'est en effet avéré efficace en vue du graissage successif des deux demi-moules car il diminue la complexité et l'amplitude du mouvement du bras du robot pour lubrifier successivement les deux demi-moules.

Selon un mode de réalisation avantageux, ledit rail est monté au-dessus de la machine I.S. du procédé de fabrication, ledit rail étant solidaire d'une poutre comprenant des perforations, lesdites perforations donnant accès à des boutons de contrôle de la machine I.S..

Selon un mode de réalisation avantageux, le robot selon l'invention est muni d'une caméra de détection en vue de prévenir les collisions avec les organes de la machine I.S.. Dans ce mode de réalisation, le robot est configuré pour adapter sa trajectoire en cas de rencontre avec un organe de la machine I.S. en vue de réduire fortement le risque d'endommagement du robot et de la machine I.S..

Il est important de noter que le robot peut être configuré de sorte que le graissage soit entièrement automatisé et effectué à intervalle de temps régulier mais il peut également être configuré dans un mode semi-automatique dans lequel le contrôle est en partie assuré par un opérateur humain qui peut par exemple déterminer quel moule a besoin d'être graissé et orienter le robot dans cette direction.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
- La Fig.1: est une vue schématique du graissage mis en œuvre par un mode de réalisation du procédé de fabrication selon l'invention ;
- Fig.2: est une vue en élévation d'un mode de réalisation du bras du robot.

Les figures ne sont pas dessinées à l'échelle. Généralement, des éléments semblables sont dénotés par des références semblables dans les figures.

### Description détaillée de modes de réalisation particuliers

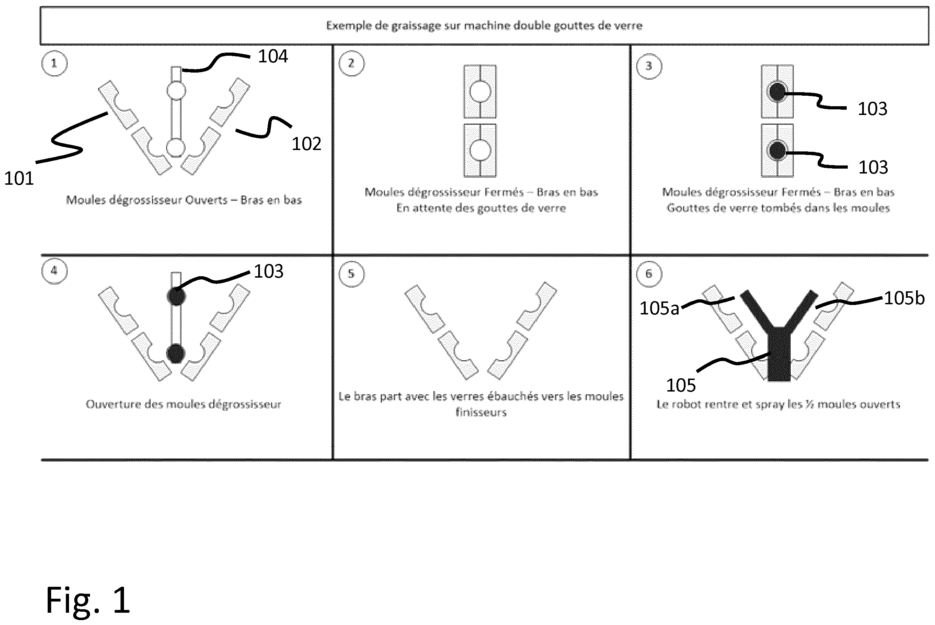

La Fig. 1 illustre donc bien le graissage mis en œuvre par le procédé de fabrication pressé-soufflé ou soufflé-soufflé selon l'invention. Le moule ébaucheur comprenant deux demi-moules 101, 102 à section double se refermant à chaque cycle de fabrication, deux paraisons en verre 103 étant chargée dans le moule ébaucheur par gravité. Les paraisons 103 sont transférées du moule ébaucheur vers le moule finisseur à l'aide d'un bras de transfert 104 après une ouverture des deux demi-moules 101, 102 du moule ébaucheur. Le bras de transfert 104 est apte à effectuer des mouvements d'aller-retour entre le moule ébaucheur et le moule finisseur en passant entre les deux demi-moules 101, 102 du moule ébaucheur afin de transféré les paraisons préformées 103 du moule ébaucheur vers le moule finisseur. Le graissage dudit moule ébaucheur, le graissage comprenant une pulvérisation par des gicleurs 105a, 105b, lesdits gicleurs 105a, 105b étant portés par le bras en Y 105 d'un robot mobile le long du côté moules ébaucheurs de la machine I.S.. Le robot mobile est configuré pour
(i) amener lesdits gicleurs 105a, 105b en position de graissage après le départ de la paraison en verre du moule ébaucheur vers le moule finisseur ;
(ii) pulvériser le lubrifiant à l'intérieur dudit moule ébaucheur ;
(iii) retirer lesdits gicleurs 105a, 105b de la position de graissage avant le retour du bras de transfert entre les deux demi-moules du moule ébaucheur.

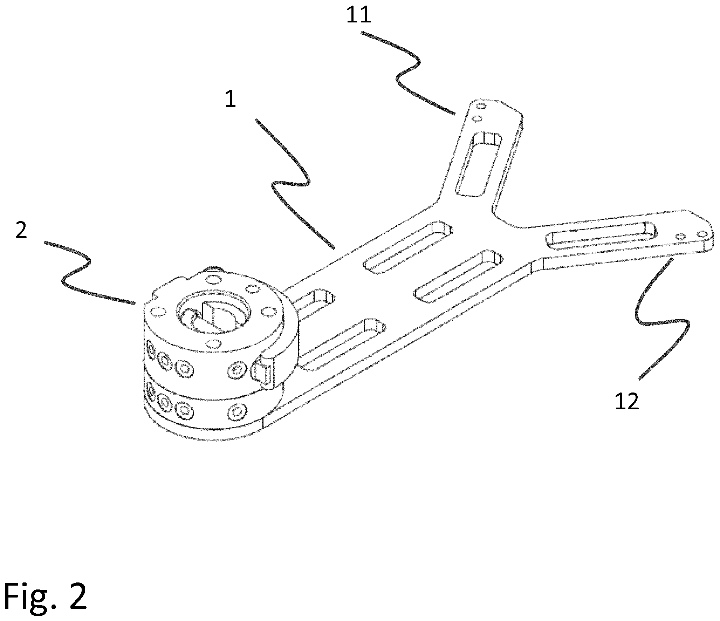

La Fig. 2 représente le bras du robot mis en œuvre dans le procédé de fabrication selon l'invention. La partie 1 qui se subdivise en deux parties 11 et 12 de manière à former un Y, constitue la partie amovible du bras du robot qui peut aisément être remplacée en cas de collision destructrice avec des organes de la machine I.S. ou d'autres outillages environnants. Cette partie 1 est au robot à l'aide d'une bride d'adaptation 2. Les deux parties 11 et 12 sont destinées à accueillir les gicleurs 105a et 105b qui lubrifient respectivement chaque demi-moule 101, 102 du moule ébaucheur. La lubrification de chaque demi-moule est effectuée de manière séquentielle, c'est-à-dire en lubrifiant d'abord le premier demi-moule 101 et ensuite le second demi-moule 102 (ou l'inverse) après que le robot ait orienté adéquatement le bras respectivement dans la position de graissage du premier demi-moule 101 et ensuite dans la position de graissage du second demi-moule 102 (ou l'inverse). La présence deux gicleurs 105a et 105b réduit avantageusement la complexité et l'amplitude du mouvement du bras à mettre en œuvre par le robot pour orienter le bras dans la position de graissage du premier et du second demi-moule.

Il apparaîtra évident pour l'homme du métier que la présente invention n'est pas limités aux exemples illustrés et décrits ci-dessus. L'invention comprend chacune des caractéristiques nouvelles ainsi que leur combinaison. La présence de numéros de référence ne peut être considérée comme limitative.

L'usage du terme « comprend » ne peut en aucune façon exclure la présence d'autres éléments autres que ceux mentionnés. L'usage de l'article défini « un » pour introduire un élément n'exclut pas la présence d'une pluralité de ces éléments. La présente invention a été décrite en relation avec des modes de réalisations spécifiques, qui ont une valeur purement illustrative et ne doivent pas être considérés comme limitatifs

## Revendications

1. Procédé de fabrication d'un produit en verre creux par une machine I.S., ledit procédé étant de type pressé-soufflé ou soufflé-soufflé et mettant en en œuvre au moins un moule ébaucheur et un moule finisseur,
ledit moule ébaucheur comprenant deux demi-moules (101, 102) se refermant à chaque cycle de fabrication, au moins une paraison en verre (103) étant chargée dans le moule ébaucheur par gravité, ladite paraison (103) étant transférée du moule ébaucheur vers le moule finisseur à l'aide d'un bras de transfert (104) après une ouverture des deux demi-moules (101, 102) du moule ébaucheur, ledit bras de transfert (104) étant apte à effectuer des mouvements d'aller-retour entre le moule ébaucheur et le moule finisseur en passant entre les deux demi-moules (101, 102) du moule ébaucheur,
ledit procédé comprenant un graissage dudit moule ébaucheur, ledit graissage étant effectué sans interruption du procédé de fabrication et comprenant une pulvérisation d'un lubrifiant, à l'intérieur dudit moule ébaucheur ouvert, par au moins un gicleur (105a, 105b),
**caractérisé par le fait que** ledit gicleur (105a, 105b) est porté par un bras (105) d'un robot externe à la machine I.S. mobile le long du côté moules ébaucheurs de la machine I.S., ledit robot mobile étant configuré pour
(i) amener ledit gicleur (105a, 105b) en position de graissage après le départ de la paraison (103) en verre du moule ébaucheur vers le moule finisseur ;
(ii) après le graissage, retirer ledit gicleur (105a, 105b) de la position de graissage avant le retour du bras de transfert (104) entre les deux demi-moules du moule ébaucheur.

2. Procédé de fabrication selon la revendication 1, selon lequel le gicleur (105) porté par le robot mobile est amenée par un mouvement de translation dans la position de graissage depuis une position de repos, ladite position de graissage étant située au-dessus des deux demi-moules (101, 102) du moule ébaucheur.

3. Procédé de fabrication selon l'une quelconque des revendications précédentes, selon lequel le bras du robot mobile (105) se subdivise en deux parties, de manière à former un Y, chacune des deux parties comprenant un gicleur (105a, 105b) assurant la pulvérisation d'un des deux demi-moules (101, 102) du moule ébaucheur.

4. Procédé de fabrication selon l'une quelconque des revendications précédentes, selon lequel le procédé de fabrication est effectué à l'aide d'une ligne de production comprenant une pluralité de moules ébaucheurs, le graissage des moules ébaucheurs étant effectué à intervalle de temps régulier, le robot mobile déplaçant le gicleur (105a, 105b) successivement au niveau des différents moules ébaucheurs, la ligne de production comprenant au moins une position de repos se trouvant à l'une de ses extrémités ou entre deux moules ébaucheurs successifs, le robot mobile étant stationné à ladite au moins une position de repos lorsqu'il n'a pas d'opération de graissage à effectuer pendant une durée minimale.

5. Procédé de fabrication selon l'une quelconque des revendications précédentes, selon lequel le graissage est effectué à l'aide d'une composition lubrifiante comprenant :
- une huile minérale naphténique, ladite huile ayant une concentration en poids comprise entre 50 et 70 % ;
- une dispersion comprenant des particules de graphite dont la taille est comprise entre 0.5 µm et 25 µm, ladite concentration en graphite dans la dispersion étant supérieure à 15% en poids, ladite dispersion ayant une concentration en poids comprise entre 5 et 25 % ;
- au moins un ester d'acide gras sulfuré, ledit ester d'acide gras comprenant de 4 à 22 atomes de carbone et étant saturé ou insaturé, ledit ester gras sulfuré ayant une concentration en poids comprise entre 10 et 16 %.

6. Procédé de fabrication selon la revendication 5, ladite composition lubrifiante comprenant en outre :
- du polydiméthylsiloxane (PDMS), ledit polydiméthylsiloxane ayant une concentration en poids comprise entre 1 et 10 %.

7. Procédé de fabrication selon l'une des revendications 5 et 6, ladite composition lubrifiante comprenant en outre :
- un alcène sulfuré comprenant de 8 à 18 atomes de carbone, ledit alcène sulfuré ayant une concentration en poids comprise entre 5 et 12 %.

8. Procédé de fabrication selon l'une des revendications 5 à 7, ladite composition lubrifiante comprenant en outre :
- un ester méthylique d'acide gras comprenant de 12 à 22 atomes de carbone et étant saturé ou insaturé, ledit ester méthylique d'acide gras ayant une concentration en poids comprise entre 1 % et 10 %.

9. Dispositif pour la mise en œuvre du procédé selon l'une quelconque des revendications précédentes comprenant
- un robot comprenant un réservoir de lubrifiant sous pression et un bras mobile comprenant au moins un gicleur, le robot étant mobile le long du côté moules ébaucheurs de la machine I.S. ;
ledit robot étant configuré pour
(i) amener le gicleur en position de graissage après le départ de la paraison en verre du moule ébaucheur vers le moule finisseur ;
(ii) pulvériser le lubrifiant à l'intérieur dudit moule ébaucheur et retirer le gicleur de la position de graissage avant le retour du bras de transfert entre les deux demi-moules du moule ébaucheur.

10. Dispositif selon la revendication 9, comprenant un rail le long duquel ledit robot peut se déplacer, ledit rail longeant les différents moules ébaucheurs de la machine I.S..

11. Dispositif selon la revendication 10, **caractérisé en ce que** ledit rail est plus long que la machine I.S., l'excédent de longueur une position de repos suffisamment large pour stationner le robot à l'écart des sources de chaleur de la machine I.S. nécessaires au moulage du verre.

12. Dispositif selon la revendication 11, comprenant une réplique du moule ébaucheur à graisser mis en œuvre par la machine I.S., ladite réplique étant installée au niveau de la position de repos.

13. Dispositif selon la revendication 12, selon lequel ladite réplique est d'une couleur offrant un contraste visible à l'œil nu avec la couleur de la composition lubrifiante mise en œuvre dans le procédé de fabrication.

14. Dispositif selon l'une des revendications 9 à 13, ledit rail étant monté au-dessus de la machine I.S. du procédé de fabrication, ledit rail étant solidaire d'une poutre comprenant des perforations, lesdites perforations donnant accès à des boutons de contrôle de la machine I.S..

15. Dispositif selon l'une des revendications 9 à 14, ledit robot étant muni en outre d'une caméra de détection en vue de prévenir les collisions avec les organes de la machine I.S..

## Patentansprüche

1. Verfahren zur Herstellung eines Produkts aus Hohlglas durch eine IS-Maschine, wobei das Verfahren vom Typ Gepresst-Geblasen oder Geblasen-Geblasen ist und mindestens eine Vorform und eine Blasform verwendet,
wobei die Vorform zwei Halbformen (101, 102) umfasst, die sich bei jedem Herstellungszyklus wieder verschließen, wobei mindestens ein Glasposten (103) durch Schwerkraft in die Vorform geladen wird, wobei der Posten (103) von der Vorform zu der Blasform mit Hilfe eines Transferarms (104) nach einem Öffnen der zwei Halbformen (101, 102) der Vorform übertragen wird, wobei der Transferarm (104) imstande ist, beim Passieren zwischen den zwei Halbformen (101, 102) der Vorform Hin- und Her-Bewegungen zwischen der Vorform und der Blasform durchzuführen,
wobei das Verfahren ein Einfetten der Vorform umfasst, wobei das Einfetten ohne Unterbrechung des Herstellungsverfahrens durchgeführt wird und ein Versprühen eines Schmiermittels, im Inneren der Vorform geöffnet, durch mindestens eine Düse (105a, 105b) umfasst,
**dadurch gekennzeichnet, dass** die Düse (105a, 105b) von einem Arm (105) eines zu der IS-Maschine externen, entlang der Vorformenseite der IS-Maschine beweglichen Roboters getragen wird,
wobei der bewegliche Roboter konfiguriert ist, um
(i) die Düse (105a, 105b) nach dem Start des Glaspostens (103) von der Vorform zu der Blasform in Einfettposition zu führen;
(ii) die Düse (105a, 105b) nach dem Einfetten vor der Rückkehr des Transferarms (104) zwischen die zwei Halbformen der Vorform aus der Einfettposition zurückzuziehen.

2. Herstellungsverfahren nach Anspruch 1, wobei die von dem beweglichen Roboter getragene Düse (105) durch eine translatorische Bewegung aus einer Ruheposition in die Einfettposition geführt wird, wobei sich die Einfettposition über den zwei Halbformen (101, 102) der Vorform befindet.

3. Herstellungsverfahren nach einem der vorangehenden Ansprüche, wobei sich der Arm des beweglichen Roboters (105) in zwei Teile derart unterteilt, dass ein Y gebildet wird, wobei jeder der zwei Teile eine Düse (105a, 105b) umfasst, die das Einsprühen von einer der zwei Halbformen (101, 102) der Vorform sichert.

4. Herstellungsverfahren nach einem der vorangehenden Ansprüche, wobei das Herstellungsverfahren mit Hilfe einer Produktionslinie durchgeführt wird, die eine Vielzahl von Vorformen umfasst, wobei das Einfetten der Vorformen in regelmäßigem Zeitintervall durchgeführt wird, wobei der bewegliche Roboter die Düse (105a, 105b) sukzessiv im Bereich der verschiedenen Vorformen verlagert, wobei die Produktionslinie mindestens eine Ruheposition umfasst, die sich an einem ihrer Enden oder zwischen zwei aufeinanderfolgenden Vorformen befindet, wobei der bewegliche Roboter in der mindestens einen Ruheposition stationiert ist, wenn während einer minimalen Dauer keinen Einfettvorgang durchzuführen ist.

5. Herstellungsverfahren nach einem der vorangehenden Ansprüche, wobei das Einfetten mit Hilfe einer Schmiermittelzusammensetzung durchgeführt wird, umfassend:
- ein Naphten-Mineralöl, wobei das Öl eine Gewichtskonzentration hat, die zwischen 50 und 70 % liegt;
- eine Dispersion, umfassend Graphitpartikel, deren Größe zwischen 0,5 µm und 25 µm liegt, wobei die Graphitkonzentration in der Dispersion höher als 15 Gew.-% ist, wobei die Dispersion eine Gewichtskonzentration hat, die zwischen 5 und 25 % liegt;
- mindestens einen geschwefelten Fettsäureester, wobei der Fettsäureester 4 bis 22 Kohlenstoffatome umfasst und gesättigt oder ungesättigt ist, wobei der geschwefelte Fettester eine Gewichtskonzentration hat, die zwischen 10 und 16 % liegt.

6. Herstellungsverfahren nach Anspruch 5, wobei die Schmiermittelzusammensetzung ferner umfasst:
- Polydimethylsiloxan (PDMS), wobei das Polydimethylsiloxan eine Gewichtskonzentration hat, die zwischen 1 und 10 % liegt.

7. Herstellungsverfahren nach einem der Ansprüche 5 und 6, wobei die Schmiermittelzusammensetzung ferner umfasst:
- ein schwefelhaltiges Alken, umfassend 8 bis 18 Kohlenstoffatome, wobei das schwefelhaltige Alken eine Gewichtskonzentration hat, die zwischen 5 und 12 % liegt.

8. Herstellungsverfahren nach einem der Ansprüche 5 bis 7, wobei die Schmiermittelzusammensetzung ferner umfasst:
- einen Fettsäuremethylester, umfassend 12 bis 22 Kohlenstoffatome und der gesättigt oder ungesättigt ist, wobei der Fettsäuremethylester eine Gewichtskonzentration hat, die zwischen 1 und 10 % liegt.

9. Vorrichtung für die Durchführung des Verfahrens nach einem der vorangehenden Ansprüche, umfassend
- einen Roboter, umfassend einen Schmiermittelvorratsbehälter unter Druck und einen beweglichen Arm, umfassend eine Düse, wobei der Roboter entlang der Vorformenseite der IS-Maschine beweglich ist;
wobei der Roboter konfiguriert ist, um
(i) die Düse nach dem Start des Glaspostens von der Vorform zu der Blasform in Einfettposition zu führen;
(ii) ein Schmiermittel im Inneren der Vorform zu versprühen und die Düse vor der Rückkehr des Transferarms zwischen die zwei Halbformen der Vorform aus der Einfettposition zurückzuziehen.

10. Vorrichtung nach Anspruch 9, umfassend eine Schiene, entlang welcher sich der Roboter verlagern kann, wobei die Schiene entlang der verschiedenen Vorformen der IS-Maschine verläuft.

11. Vorrichtung nach Anspruch 10, **dadurch gekennzeichnet, dass** die Schiene länger als die IS-Maschine ist, die Uberlänge eine Ruheposition breit genug um den Roboter fern von den Wärmequellen der IS-Maschine, die zum Formen des Glases nötig sind, zu parken.

12. Vorrichtung nach Anspruch 11, umfassend eine von der IS-Maschine verwendete Replik der einzufettenden Vorform, wobei die Replik im Bereich der Ruheposition installiert ist.

13. Vorrichtung nach Anspruch 12, wobei die Replik eine Farbe hat, die einen für das bloße Auge sichtbaren Kontrast mit der Farbe der bei dem Herstellungsverfahren verwendeten Schmiermittelzusammensetzung bietet.

14. Vorrichtung nach einem der Ansprüche 9 bis 13, wobei die Schiene über der IS-Maschine des Herstellungsverfahrens angebracht ist, wobei die Schiene mit einem Balken fest verbunden ist, der Durchbrüche umfasst, wobei die Durchbrüche Zugang zu den Steuerknöpfen der IS-Maschine gewähren.

15. Vorrichtung nach einem der Ansprüche 9 bis 14, wobei der Roboter ferner mit einer Detektionskamera ausgestattet ist, um Kollisionen mit den Organen der IS-Maschine vorzubeugen.

## Claims

1. A method for manufacturing a hollow glass product by an I. S. machine, said method being of the press-and-blow or blow-blow type and implementing at least a blank mould and blow mould,
said blank mould comprising two half-moulds (101, 102) closing at each manufacturing cycle, at least one glass parison (103) being filled in the blank mould by gravity, said parison (103) being transferred from the blank mould to the blow mould using a transfer arm (104) after opening both half-moulds (101, 102) of the blank mould, said transfer arm (104) being able to make reciprocating motions between the blank mould and the blow mould by passing between both half-moulds (101, 102) of the blank mould,
said method comprising lubricating said blank mould, said lubrication being performed without interrupting the manufacturing method and comprising spraying a lubricant, inside said blank mould open, by at least one spray nozzle (105a, 105b),
**characterised in that** said spray nozzle (105a, 105b) is carried by an arm (105) of a robot external to the I. S. machine movable along the blank mould side of the I. S. machine, said movable robot being configured to
(i) bring said spray nozzle (105a, 105b) into a lubrication position after the glass parison (103) leaves the blank mould to the blow mould;
(ii) after lubrication, withdraw said spray nozzle (105a, 105b) from the lubrication position before the transfer arm (104) returns between both half-moulds of the blank mould.

2. The manufacturing method according to claim 1, wherein the spray nozzle (105) carried by the movable robot is brought by a translational motion into the lubrication position from a rest position, said lubrication position being located above both half-moulds (101, 102) of the blank mould.

3. The manufacturing method according to any of the preceding claims, wherein the arm of the movable robot (105) is subdivided into two parts, so as to form a Y-shape, each of both parts comprising a spray nozzle (105a, 105b) providing spraying of one of both half-moulds (101, 102) of the blank mould.

4. The manufacturing method according to any of the preceding claims, wherein the manufacturing method is performed using a production line comprising a plurality of blank moulds, the lubrication of the blank moulds being performed at regular time intervals, the movable robot moving the spray nozzle (105a, 105b) successively at different blank moulds, the production line comprising at least one rest position located at one of its ends or between two successive blank moulds, the movable robot being parked in said at least one rest position when it has no lubrication operation to perform for a minimal duration.

5. The manufacturing method according to any of the preceding claims, wherein the lubrication is made using a lubricating composition comprising:
- a naphtenic mineral oil, said oil having a weight concentration between 50 and 70%;
- a dispersion comprising graphite particles the size of which is between 0.5µm and 25µm, said graphite concentration in the dispersion being higher than 15% by weight, said dispersion having a weight concentration between 5 and 25%;
- at least one sulphur fatty acid ester, said fatty acid ester comprising from 4 to 22 carbon atoms and being saturated or unsaturated, said sulphur fatty ester having a weight concentration between 10 and 16%.

6. The manufacturing method according to claim 5, said lubricating composition further comprising:
- polydimethylsiloxane (PDMS), said polydimethylsiloxane having a weight concentration between 1 and 10%.

7. The manufacturing method according to one of claims 5 and 6, said lubricating composition further comprising:
- a sulphur alkene comprising from 8 to 18 carbon atoms, said sulphur alkene having a weight concentration between 5 and 12%.

8. The manufacturing method according to one of claims 5 to 7, said lubricating composition further comprising:
- a fatty acid methyl ester comprising from 12 to 22 carbon atoms and being saturated or unsaturated, said fatty acid methyl ester having a weight concentration between 1% and 10%.

9. A device for implementing the method according to any of the preceding claims comprising
- a robot comprising a pressurised lubricant tank and a movable arm comprising at least one spray nozzle, the robot being movable along the blank mould side of the I. S. machine;
said robot being configured to
(i) bring the spray nozzle into a lubrication position after the glass parison leaves the blank mould to the blow mould;
(ii) spray the lubricant inside said blank mould and withdraw the spray nozzle from the lubrication position before the transfer arm returns between both half-moulds of the blank mould.

10. The device according to claim 9, comprising a rail along which said robot can move, said rail running along the different blank moulds of the I. S. machine.

11. The device according to claim 10, **characterised in that** said rail is longer than the I. S. machine, the surplus length a wide enough rest position to park the robot spaced apart from heat sources of the I. S., machine that are required for glass moulding.

12. The device according to claim 11, comprising a replica of the blank mould to be lubricated implemented by the I. S. machine, said replica being set at the rest position.

13. The device according to claim 12, wherein said replica is of a colour providing a contrast visible to the naked eye with the colour of the lubricating composition implemented in the manufacturing method.

14. The device according to one of claims 9 to 13, said rail being mounted above the I. S. machine of the manufacturing method, said rail being integral with a beam comprising perforations, said perforations providing access to control knobs of the I. S. machine.

15. The device according to one of claims 9 to 14, said robot being further provided with a detection camera for the purpose of preventing collisions with members of the I. S. machine.
